# EUROPEAN PATENT APPLICATION

(11) **EP 4 645 278 A1**
(43) Date of publication of application: **05.11.2025**
(21) Application number: 23911587.6
(22) Date of filing: 06.12.2023
(51) Int. Cl.: G08C 15/00, G01C 15/00

(54) **MEASUREMENT SYSTEM, ENVIRONMENT SYSTEM, MEASUREMENT METHOD, AND PROGRAM**

(30) Priority: 27.12.2022 JP 2022210788
(71) Applicant: Panasonic Intellectual Property Management Co., Ltd., Kadoma-shi, Osaka 571-0057 (JP)
(72) Inventor: NAKAMURA, Keisuke, Kadoma-shi, Osaka 571-0057 (JP); HOJO, Tsukasa, Kadoma-shi, Osaka 571-0057 (JP); YAMASHITA, Hideki, Kadoma-shi, Osaka 571-0057 (JP); MAEKAWA, Akimichi, Kadoma-shi, Osaka 571-0057 (JP)
(74) Representative: Appelt, Christian W.
(86) International application number: PCT/JP2023/043603
(87) International publication number: WO 2024/142806

(57) **Abstract**

Provided are a measuring system, an environmental system, a measuring method, and a program, all of which allow for taking measurements easily even in a situation where it is difficult to access a target location by traveling. A measuring system (1) includes: a main body unit (1A) configured to be movable inside a specific space (4) including a measuring area (41, 42, 43, 44); and a measuring unit (1B) removably attached to the main body unit (1A). The main body unit (1A) includes a moving mechanism (10) for moving through the specific space (4). The measuring unit (1B) includes a measuring instrument (11) for measuring a predetermined target of measurement on an environment in the measuring area (41, 42, 43, 44). The measuring instrument (11) is configured to be able to measure the target of measurement with the measuring unit (1B) removed from the main body unit (1A).

## Description

### Technical Field

The present disclosure generally relates to a measuring system, an environmental system, a measuring method, and a program. More particularly, the present disclosure relates to a measuring system designed to measure a target of measurement on a given environment while moving through a specific space and also relates to an environmental system, a measuring method, and a program.

### Background Art

Patent Literature 1 discloses a measuring system configured to be movable inside a specific space. This measuring system includes a moving mechanism and a measuring instrument. When activated, the moving mechanism carries the measuring instrument to a target location inside the specific space to have the measuring instrument measure a predetermined target of measurement on a given environment.

### Citation List

### Patent Literature

Patent Literature 1: JP 2020-194642 A

### Summary of Invention

In the measuring system disclosed in Patent Literature 1, a mover serving as the measuring system sometimes has difficulty in accessing a target location due to, for example, the presence of an obstacle in its measuring area, or for other reasons.

An object of the present disclosure is to provide a measuring system, an environmental system, a measuring method, and a program, all of which allow for taking measurements easily even in such a situation where it is difficult for the mover to access the target location.

A measuring system according to an aspect of the present disclosure includes: a main body unit configured to be movable inside a specific space including a measuring area; and a measuring unit removably attached to the main body unit. The main body unit includes a moving mechanism for moving through the specific space. The measuring unit includes a measuring instrument for measuring a predetermined target of measurement on an environment in the measuring area. The measuring instrument is configured to be able to measure the target of measurement with the measuring unit removed from the main body unit.

An environmental system according to another aspect of the present disclosure includes the measuring system described above and an environment generating system. The environment generating system includes a target that is at least one of a generator or a sensor. Each of the generator and the sensor generates the environment in the specific space.

A measuring method according to still another aspect of the present disclosure is a measuring method performed by using a measuring system that moves through a specific space in which a target is installed. The target is at least one of a generator or a sensor of an environment generating system. The environment generating system generates an environment in the specific space. The measuring method includes: a moving step including causing a main body unit to move, with a measuring unit attached thereto, to a measuring area in the specific space; and a measuring step including measuring a target of measurement on the environment in the measuring area by using the measuring unit removed from the main body unit after the main body unit has stopped moving.

A program according to yet another aspect of the present disclosure is designed to cause one or more processors to perform the measuring method described above.

### Brief Description of Drawings

[FIG. 1] FIG. 1 is a block diagram illustrating respective configurations for a measuring system and an environment generating system according to an exemplary embodiment;

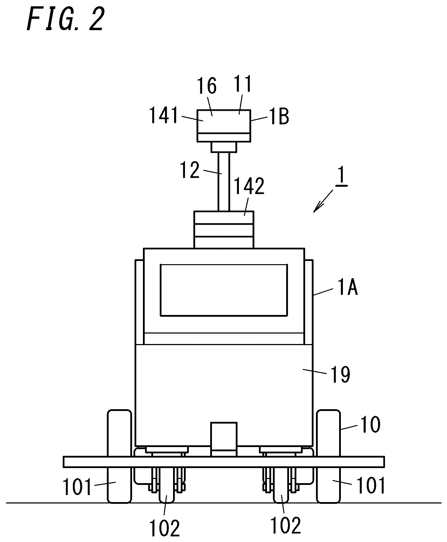

[FIG. 2] FIG. 2 is a front view schematically illustrating the measuring system;

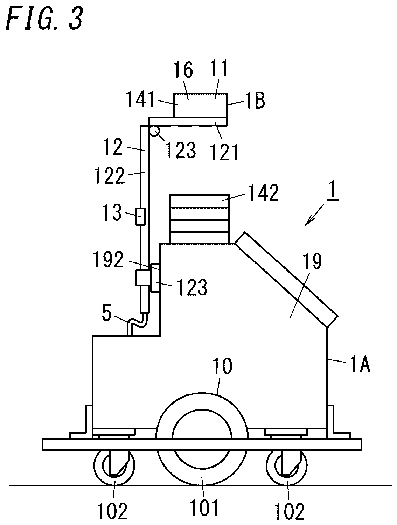

[FIG. 3] FIG. 3 is a side view schematically illustrating the measuring system;
[FIG. 4] FIG. 4 is a side view schematically illustrating a state of taking measurements using the measuring system; and
[FIG. 5] FIG. 5 is a perspective view schematically illustrating a means for estimating a location using the measuring system.

### Description of Embodiments

A measuring system, an environment generating system, and an environmental system according to an exemplary embodiment will now be described with reference to the accompanying drawings.

Note that the drawings to be referred to in the following description of embodiments are all schematic representations. Thus, the ratio of the dimensions (including thicknesses) of respective constituent elements illustrated on the drawings does not always reflect their actual dimensional ratio.

### (Embodiment)

### (1) Overview

An overview of a measuring system 1, an environment generating system 2, and an environmental system 3 according to this embodiment will be described with reference to the accompanying drawings.

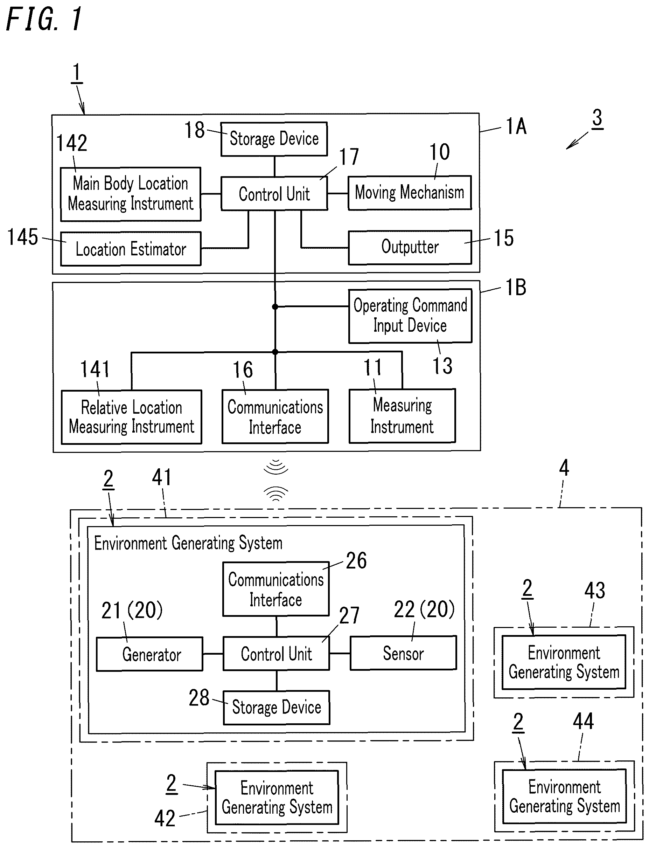

The environmental system 3 according to this embodiment includes the measuring system 1 and a plurality of environment generating systems 2, as shown in FIG. 1. The plurality of environment generating systems 2 may be, for example, four environment generating systems 2.

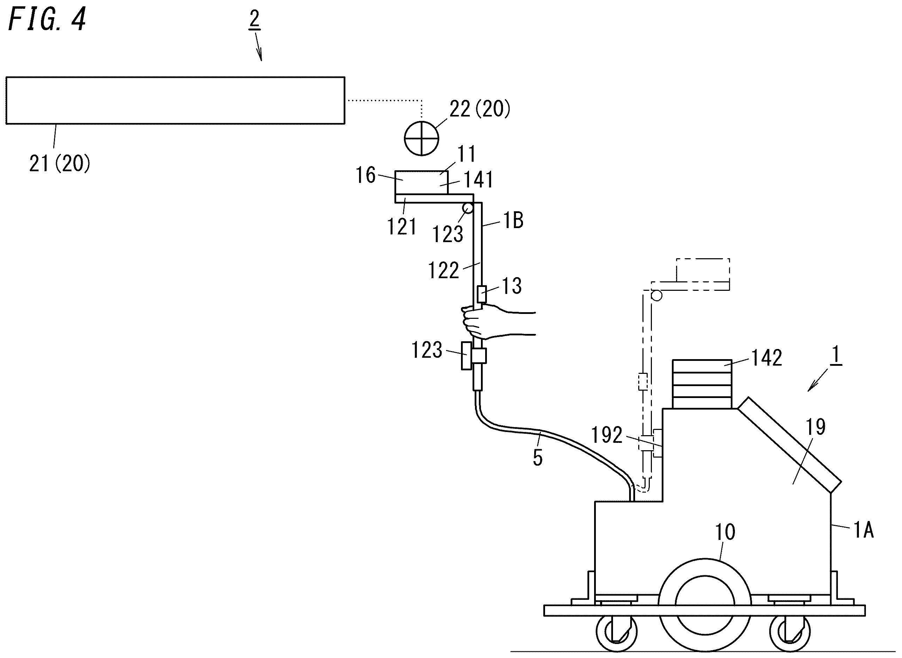

Each of the plurality of environment generating systems 2 is, for example, a system for generating an environment in a specific space 4. The specific space 4 is an interior space of a non-residential facility, such as an office, a store, a school, or a tunnel. The specific space 4 is not limited to an interior space of a non-residential facility but may also be an interior space of an apartment complex or an interior space of a single-family dwelling house. A plurality of targets 20 are set in place in the specific space 4 (refer to FIGS. 1 and 4). Each of the plurality of targets 20 is at least one of a generator 21 or a sensor 22 included in the environment generating system 2.

The environment generating system 2 is, for example, a system for creating a lighting environment in the specific space 4. That is to say, the generator 21 according to this embodiment is a lightning fixture configured to generate light in the specific space 4.

The measuring system 1 is a system designed to measure a predetermined target of measurement on the environment in the specific space 4 while autonomously moving through the specific space 4. The measuring system 1 includes a main body unit 1A and a measuring unit 1B provided separately from the main body unit 1A. The main body unit 1A is configured to be movable inside the specific space 4 including measuring areas 41, 42, 43, and 44. Each of the measuring areas 41, 42, 43, and 44 does not have to have any particular shape or dimensions. The shape and the dimensions of the measuring areas 41, 42, 43, and 44 may be the same as each other or different from one another, whichever is appropriate. The target 20 is set in place in each of the measuring areas 41, 42, 43, and 44. The measuring unit 1B is configured to be removably attached to the main body unit 1A.

The main body unit 1A includes a moving mechanism 10. The moving mechanism 10 is a mechanism for moving through the specific space 4. The moving mechanism 10 is activated to move through the measuring areas 41, 42, 43, and 44 in this order in the specific space 4 when the measuring system 1 starts taking measurements on the specific space 4.

The measuring unit 1B includes a measuring instrument 11. The measuring instrument 11 measures the predetermined target of measurement in each of the measuring areas 41, 42, 43, and 44. The predetermined target of measurement according to this embodiment is the illuminance of the light generated by the generator 21 of the environment generating system 2.

In the measuring system 1 according to this embodiment, the measuring instrument 11 of the measuring unit 1B may measure the predetermined target of measurement with the measuring unit 1B attached to the main body unit 1A. In addition, in the measuring system 1 according to this embodiment, the measuring instrument 11 of the measuring unit 1B may also measure the predetermined target of measurement even with the measuring unit 1B removed from the main body unit 1A.

Thus, the measuring system 1 according to this embodiment may take measurements easily with the measuring unit 1B removed from the main body unit 1A even in a place inaccessible to the main body unit 1A, and therefore, may improve the work efficiency.

### (2) Configurations

Configurations for the measuring system 1, the environment generating system 2, and the environmental system 3 according to this embodiment will be described in further detail.

The environmental system 3 according to this embodiment includes, as described above, the measuring system 1 including the main body unit 1A and the measuring unit 1B, and four environment generating systems 2. In this embodiment, the plurality of measuring areas 41, 42, 43, and 44 correspond one to one to the plurality of environment generating systems 2 in the specific space 4.

### (2.1) Main body unit

The main body unit 1A according to this embodiment includes, as shown in FIG. 1 and other drawings, the moving mechanism 10, a main body location measuring instrument 142, a location estimator 145, an outputter 15, a control unit 17, and a storage device 18.

The moving mechanism 10 is a mechanism for driving the main body unit 1A. The moving mechanism 10 includes, for example, a plurality of drive wheels 101, a plurality of driven wheels 102, and a motor for driving the plurality of drive wheels 101. In the moving mechanism 10, the motor starts running in accordance with an instruction given by the control unit 17, thus transmitting the rotational force of the motor to the plurality of drive wheels 101, and thereby turning the plurality of drive wheels 101. Therefore, the main body unit 1A and the measuring system 1 including the main body unit 1A may move through the measuring areas 41, 42, 43, and 44 in the specific space 4.

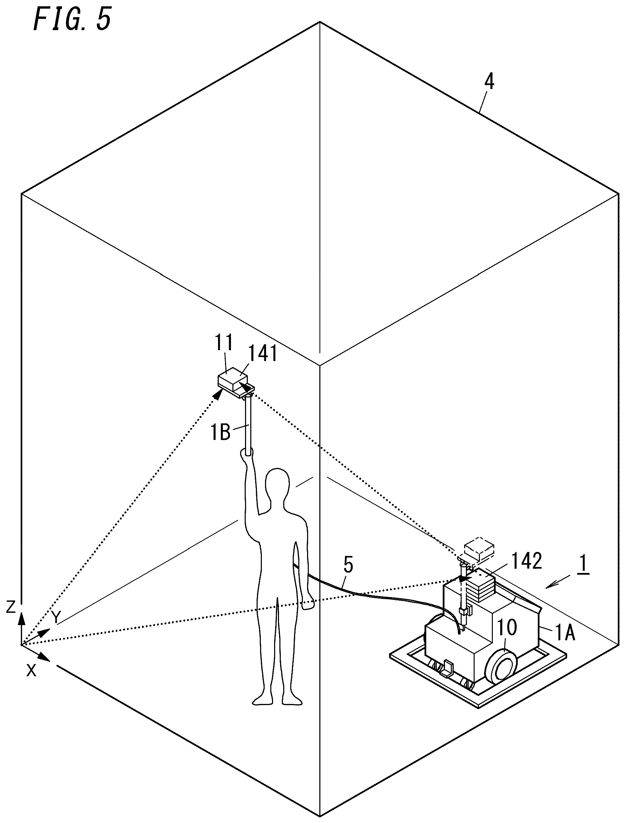

The main body location measuring instrument 142 measures the location of the main body unit 1A. That is to say, the main body location measuring instrument 142 is configured to acquire self-location data of the main body unit 1A in a three-dimensional space (refer to FIG. 5). The main body location measuring instrument 142 is a unit that uses LiDAR (Light Detection and Ranging) technique, for example. This unit will be hereinafter referred to as a "LiDAR unit." The main body location measuring instrument 142 may acquire, as the self-location data, data about the distance to a structure, such as an inner wall or an obstacle in the specific space 4.

The location estimator 145 estimates the location of the measuring unit 1B. The location estimator 145 estimates, as will be described later, the location of the measuring unit 1B based on the location of the main body unit 1A as measured by the main body location measuring instrument 142, a relative location of the measuring unit 1B as measured by a relative location measuring instrument 141, and map information of the specific space 4.

The outputter 15 outputs correspondence information. This correspondence information is a piece of information representing correspondence between output information based on the measuring result obtained by the measuring instrument 11 and the target 20. If the target 20 is the generator 21, for example, the correspondence information includes control information as the output information and identification information for use to identify the generator 21. If the target 20 is the sensor 22, for example, the correspondence information includes adjustment information as a piece of the output information and identification information for use to identify the sensor 22.

The control unit 17 may include, for example, a computer system including one or more processors and one or more memories as a principal constituent element thereof. The functions of the control unit 17 are performed by making the processor of the computer system execute a program stored in the memory of the computer system. The program may be stored in advance in the memory. Alternatively, the program may also be downloaded via a telecommunications line such as the Internet or distributed after having been stored in a non-transitory storage medium such as a memory card.

The control unit 17 controls each of the moving mechanism 10, the main body location measuring instrument 142, the location estimator 145, and the outputter 15 which are included in the main body unit 1A. In addition, the control unit 17 also controls each of the measuring instrument 11, the relative location measuring instrument 141, and a communications interface 16 which are included in the measuring unit 1B. The control unit 17 generates, as the output information, the control information for use to control the target 20.

If the target 20 is the generator 21 (e.g., a lightning fixture in this embodiment), for example, the control unit 17 generates, as the output information, the control information for use to control the output of the generator 21 to adjust the illuminance of the light generated by the generator 21 to a preset value when the measuring result obtained by the measuring instrument 11 is different from the preset value. More specifically, the control unit 17 produces correspondence information including the control information for use to control the output of the generator 21 and then makes the outputter 15 output the correspondence information thus produced. The correspondence information output by the outputter 15 is transmitted to the environment generating system 2 via the communications interface 16 included in the measuring unit 1B. In the environment generating system 2, a control unit 27 (to be described later) controls the output of the generator 21 by following the control information included in the correspondence information.

The storage device 18 is implemented as, for example, any device selected from the group consisting of a ROM (Read-Only Memory), a RAM (Random Access Memory), and an EEPROM (Electrically Erasable Programmable Read-Only Memory). The storage device 18 may store self-location data, relative location data, map data, route data, sensor location data, measurement location data, initial setting data, and measurement data. The storage device 18 may also store data about the order of measurement with respect to f the plurality of measuring areas 41, 42, 43, and 44.

The above-described self-location data is data about the location of the main body unit 1A as obtained by the main body location measuring instrument 142. The relative location data is data about the relative location of the measuring unit 1B as measured by the relative location measuring instrument 141. The map data is data about the location of a structure installed in the specific space 4. The route data is data about a route to the target.

The sensor location data is data about the location of the sensor 22 in the specific space 4. The sensor location data includes, as shown in FIG. 5, an X-coordinate that is a coordinate in an X-axis direction, a Y-coordinate that is a coordinate in a Y-axis direction, and a Z-coordinate that is a coordinate in a Z-axis direction. The sensor location data is stored in the storage device 18 in a format associated with the identification information for use to identify the sensor 22.

The measurement location data is data about the location (i.e., a point of measurement) at which the measuring instrument 11 takes measurements. One or plurality of points of measurement are set for each of the measuring areas 41, 42, 43, and 44. The measurement location data is stored in the storage device 18 in a format associated with the identification information for use to identify the generator 21. The initial setting data is data set by the sensor 22. The initial setting data includes, for example, the identification information for use to identify the sensor 22 and an operation mode of the sensor 22. The measurement data is data about the illuminance of the light obtained as the measuring result by the measuring instrument 11. The measurement data is stored in the storage device 18 in a format associated with the identification information of the generator 21.

The main body unit 1A includes a housing 19 serving as an outer shell of the main body unit 1A. The moving mechanism 10 is provided for the lower part of the housing 19. The housing 19 is driven along a traveling surface such as a floor surface by turning the plurality of drive wheels 101 of the moving mechanism 10.

The main body location measuring instrument 142 is provided for the upper part of the housing 19. Also, a holder 192 for removably holding the measuring unit 1B is provided for the housing 19. The holder 192 is located, for example, below the part, on which the main body location measuring instrument 142 is installed, of the housing 19. The location estimator 145, the outputter 15, the control unit 17, and the storage device 18 are housed inside the housing 19.

### (2.2) Measuring unit

The measuring unit 1B according to this embodiment includes the measuring instrument 11, a supporting member 12, an operating command input device 13, the relative location measuring instrument 141, and the communications interface 16.

The measuring instrument 11 measures a predetermined target of measurement on the environment in the measuring areas 41, 42, 43, and 44. In this embodiment, the predetermined target of measurement is the illuminance of the light generated by the generator 21. The generator 21 is a lightning fixture. The measuring instrument 11 measures, as the target of measurement, the illuminance of the light generated by the generator 21. In this embodiment, the measuring instrument 11 is an illuminometer. The measuring instrument 11 outputs, as the result of measurement, data about the illuminance of the light to the control unit 17.

The measuring unit 1B may be selectively attached to the main body unit 1A (hereinafter referred to as an "attached state") or removed from the main body unit 1A (hereinafter referred to as a "removed state"). The measuring instrument 11 is configured to be able to measure the target of measurement in both the attached state and the removed state. The measuring instrument 11 is configured to be able to output, as the result of measurement, data about the illuminance of the light to the control unit 17 in both the attached state and the removed state.

The supporting member 12 is coupled to the measuring instrument 11. The supporting member 12 is configured as a rod-like member for supporting the measuring instrument 11. In the attached state, the measuring instrument 11 is supported by the main body unit 1A via the supporting member 12.

The supporting member 12 includes a supporting portion 121, a gripping portion 122, a coupling portion 123, and an attachment portion 125 removably attached to the holder 192 of the main body unit 1A. The supporting portion 121 is a portion for supporting the measuring instrument 11. The gripping portion 122 is a rod-like portion provided to allow a user to grip the portion. As used herein, the user is, for example, a contractor. The coupling portion 123 is a portion that couples the supporting portion 121 to the gripping portion 122. The supporting portion 121 and the gripping portion 122 may be coupled to each other via the coupling portion 123 to form an L-member overall. The attachment portion 125 is a portion removably attached to the holder 192 of the main body unit 1A.

The angle formed by the supporting portion 121 and the measuring instrument 11 supported by the supporting portion 121 may be changed via the coupling portion 123. Optionally, an actuator for changing the angle of the supporting portion 121 may also be provided for the supporting member 12. In the attached state, the measuring instrument 11 is supported right over the main body unit 1A via the supporting member 12.

The operating command input device 13 is configured to accept an operating command entered by the user. In this example, the user is, for example, a contractor. The operating command input device 13 is installed on a part of the gripping portion 122 that forms part of the supporting member 12. The operating command input device 13 is, for example, an operating switch configured to be ready to be operated, with fingers, by the user who is gripping the gripping portion 122. The operating command input device 13 is configured to be able to output the result of operation by the user to the control unit 17 in both the attached state and the removed state.

The relative location measuring instrument 141 is configured to measure the relative location of the measuring unit 1B with respect to the main body unit 1A in the three-dimensional space. The relative location measuring instrument 141 is, for example, a LiDAR unit supported by the supporting member 12. The relative location measuring instrument 141 is configured to be able to output, as the result of measurement, the relative location of the measuring unit 1B to the control unit 17 in both the attached state and the removed state.

The measuring unit 1B is electrically connected to the main body unit 1A via a flexible electric wire 5. Each of the measuring instrument 11, the operating command input device 13, the relative location measuring instrument 141, and the communications interface 16, which are included in the measuring unit 1B, is connected to the control unit 17 of the main body unit 1A via the electric wire 5. It is preferable that the electric wire 5 be provided to be extendable from the main body unit 1A.

It is also preferable that the measuring unit 1B be connected, without using the electric wire 5, to the main body unit 1A via wireless communication such as infrared communication. In that case, each of the measuring instrument 11, the supporting member 12, the operating command input device 13, the relative location measuring instrument 141, and the communications interface 16, which are included in the measuring unit 1B, is wirelessly connected to the control unit 17 of the main body unit 1A.

The communications interface 16 is, for example, a communications module for wirelessly communicating with the environment generating system 2. The communications interface 16 establishes, for example, an infrared communication with the environment generating system 2. The communications interface 16 receives, for example, the initial setting data of the sensor 22 from the environment generating system 2. If the target 20 is the generator 21, the communications interface 16 transmits a type of correspondence information, of which the output information is the control information for use to control the output of the generator 21, to the environment generating system 2. If the target 20 is the sensor 22, the communications interface 16 transmits another type of correspondence information, of which the output information is either the initial setting data or the adjustment information, to the environment generating system 2. The adjustment information is information for use to adjust the state of the sensor 22. The adjustment information is, for example, information for use to adjust the sensitivity of the sensor 22.

### (2.3) Environment generating system

The environment generating system 2 according to this embodiment includes, as shown in FIG. 1, the generator 21 and the sensor 22 serving as the targets 20, a communications interface 26, a control unit 27, and a storage device 28. The environment generating system 2 according to this embodiment is a lightning system with a sensor including the generator 21 for use as a lightning fixture for generating light in the specific space 4, and the sensor 22.

The generator 21 generates an environment in the specific space 4. In this embodiment, the generator 21 is a lightning fixture for generating light in the specific space 4. The generator 21 is designed to have its operation mode switched, in accordance with an output signal representing the result of the detection by the sensor 22, between a mode in which the generator 21 generates light and a mode in which the generator 21 generates no light.

The sensor 22 is, for example, a brightness sensor. The sensor 22 is, for example, a photodiode type sensor. If a preset illuminance in an installed area is 500 lux, for example, the sensor 22 is used to cause the generator 21 to start outputting or operating for the purpose of maintaining the illuminance in the installed area at 500 lux, even when external light comes from outside of the given environment in the daytime or the quantity of light decreases in the nighttime.

The communications interface 26 is, for example, a communications module for wirelessly communicating with the measuring system 1. The communications interface 26 establishes, for example, an infrared communication with the measuring unit 1B of the measuring system 1. The communications interface 26 transmits the initial setting data of the sensor 22 stored in the storage device 28 upon a request from the measuring system 1, for example. If the target 20 is the generator 21, the communications interface 26 receives correspondence information, including the control information for use to control the operation of the generator 21, from the measuring system 1. If the target 20 is the sensor 22, the communications interface 26 receives correspondence information, including the adjustment information for use to adjust the state of the sensor 22, from the measuring system 1.

The control unit 27 may include, for example, a computer system including one or more processors and one or more memories as a principal constituent element thereof. The functions of the control unit 27 are performed by making the processor of the computer system execute a program stored in the memory of the computer system. The program may be stored in advance in the memory. Alternatively, the program may also be downloaded via a telecommunications line such as the Internet or distributed after having been stored in a non-transitory storage medium such as a memory card. The control unit 27 controls each of the generator 21, the sensor 22, and the communications interface 26.

The storage device 28 is implemented, for example, as any device selected from the group consisting of a ROM, a RAM, and an EEPROM. The storage device 28 may store the identification information of each of the generator 21 and the sensor 22. The storage device 28 may store a preset value of the illuminance of the light generated by the generator 21. In addition, the storage device 28 may also store the initial setting data about the sensor 22.

### (3) Measuring method

A measuring method performed by using the measuring system 1 according to this embodiment includes a moving step and a measuring step. In the measuring method according to this embodiment, the moving step and the measuring step are performed every time the measuring system 1 takes measurements at a set point of measurement. The measuring system 1 used in this case is a measuring system 1 moving through the specific space 4 in which a target 20 is installed. The target 20 is at least one of the generator 21 or the sensor 22of the environment generating system 2 for generating an environment in the specific space 4. The storage device 18 of the measuring system 1 stores a program to cause one or more processors to execute this measuring method.

The moving step is a step in which the main body unit 1A moves, with the measuring unit 1B attached thereto, to a predetermined location in any one of the plurality of measuring areas 41, 42, 43, and 44, in the specific space 4. In this moving step, the main body unit 1A is caused to move toward a predetermined location in the measuring area 41, for example, when the moving mechanism 10 thereof is driven in accordance with an instruction given by the control unit 17. The control unit 17 recognizes the location of the main body unit 1A in the specific space 4 using the self-location data obtained by the main body location measuring instrument 142 and the map data and measurement location data read out from the storage device 18, thus controlling the moving mechanism 10.

The measuring step is the step of making the measuring unit 1B of the measuring system 1 that has stopped moving in the moving step measure a target of measurement at a predetermined point of measurement in any one of the measuring areas 41, 42, 43, and 44.

For example, in a situation where there are no particular obstacles that will impede its traveling on a traveling surface in the measuring area 41, the main body unit 1A moves, with the measuring unit 1B attached thereto, to the predetermined point of measurement in the measuring area 41. Next, the measuring instrument 11 of the measuring unit 1B attached to the main body unit 1A measures the target of measurement at the predetermined point of measurement.

On the other hand, in a situation where there is any obstacle at the predetermined point of measurement in the measuring area 41, for example, the main body unit 1A moves, with the measuring unit 1B attached thereto, to a point located close to the point of measurement in the measuring area 41 which the main body unit 1A can reach. Next, the user, such as a conductor, removes the measuring unit 1B from the main body unit 1A that has stopped moving and grips the measuring unit 1B, and then manually carries the measuring unit 1B to the predetermined point of measurement. Then, the user enters a command to start measurement by, for example, operating the operating command input device 13 with his or her fingers. This allows the measuring unit 1B, removed from the main body unit 1A, to measure the target of measurement on the environment in the measuring area 41. In the others measuring areas 42, 43, and 44, the user may also measure the target of measurement on the environment by performing the moving step and the measuring step in the same way. The storage device 18 of the measuring system 1 stores data about the location of the measuring unit 1B and data about the target of measurement measured by the measuring instrument 11 at the location.

In the measuring step, the control unit 17 compares the result of measurement obtained from the measuring instrument 11 with a preset value read out from the storage device 18. The control unit 17 ends the processing if the result of measurement agrees with the preset value. If the result of measurement is different from the preset value, the control unit 17 generates correspondence information including the control information for use to control the generator 21 and the identification information of the generator 21 and makes the outputter 15 output the correspondence information thus generated. Likewise, when the preset value is stored in the control unit 27, the control unit 17 also generates, based on the result of measurement obtained from the measuring instrument 11, the correspondence information including the control information for use to control the generator 21 and the identification information of the generator 21 and makes the outputter 15 output the correspondence information thus generated.

The correspondence information output by the outputter 15 is transmitted, via the communications interface 16, to the environment generating system 2 including the target 20 associated with the measuring area 41. The control information is a piece of information for use to control the output of the generator 21 so that the illuminance of the light generated by the generator 21 is equal to the preset value.

In the environment generating system 2, when the communications interface 26 receives the correspondence information from the measuring system 1, the control unit 27 sees if the identification information included in this correspondence information agrees with the identification information of the generator 21 associated with the control unit 27 itself. If the answer is Yes, the control unit 27 controls the output of the generator 21 in accordance with the control information included in the correspondence information. As a result, the illuminance of the light generated by the generator 21 is adjusted to be equal to the preset value.

In the example described above, the target 20 is the generator. However, this is only an example and should not be construed as limiting. The target 20 may also be the sensor 22. In that case, the output information is adjustment information for use to adjust the state of the sensor 22. The output information is, for example, information for use to adjust the sensitivity of the sensor 22.

### (4) Estimating location of measuring unit

The location of the measuring unit 1B removed from the main body unit 1A is estimated by the location estimator 145 included in the main body unit 1A. The location estimator 145 estimates the location of the measuring unit 1B based on the self-location data, the relative location data, and the map data. The self-location data is data about the location of the main body unit 1A. The relative location data is data about the relative location of the measuring unit 1B with respect to the main body unit 1A. The map data is data about map information about the specific space 4.

The location of the main body unit 1A is measured by the main body location measuring instrument 142 included in the main body unit 1A and the result of measurement is stored in the storage device 18. The relative location of the measuring unit 1B with respect to the main body unit 1A is measured by the relative location measuring instrument 141 included in the measuring unit 1B and the result of measurement is stored in the storage device 18.

The measuring system 1 according to this embodiment may measure the target of measurement with the measuring unit 1B removed, depending on a variety of situations such as a situation where an obstacle is present, from the main body unit 1A. The measuring system 1 may store the result of measurement in the storage device 18 along with data about location of the measuring unit 1B at the time of measurement. The measuring system 1 according to this embodiment takes measurements while the user is carrying, in the specific space 4, the measuring unit 1B removed from the main body unit 1A by gripping the measuring unit 1B with his or her hand. This allows the measuring system 1 to easily acquire measurement data at any location in the specific space 4 and store the data thus acquired in the storage device 18 along with the data about the measurement location.

### (5) Variations

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure.

Next, variations of the exemplary embodiment will be enumerated one after another. Note that the variations to be described below may be adopted in combination as appropriate.

The measuring system 1 and environment generating system 2 according to the present disclosure includes a computer system in their control unit 17, 27, for example. The computer system may include a processor and a memory as principal hardware components thereof. The computer system performs the functions of the measuring system 1 and environment generating system 2 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium. Examples of such a non-transitory storage medium include a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

At least some functions (e.g., the function of the control unit 17) of the measuring system 1 may be implemented as, for example, a cloud computing system. Likewise, at least some functions (e.g., the function of the control unit 27) of the environment generating system 2 may be implemented as, for example, a cloud computing system.

In the above-described embodiment, the main body location measuring instrument 142 is implemented as a LiDAR unit. However, this should not be construed as limiting. For example, the main body location measuring instrument 142 may also be configured to detect the location of the moving mechanism 10 based on the number of rotations of the motor included in the moving mechanism 10. In still another example, in a situation where the measuring system 1 includes a camera, the main body location measuring instrument 142 may also be configured to detect the location of the main body unit 1A based on video shot by the camera. In yet another example, the main body location measuring instrument 142 may also include an acceleration sensor or a gyro sensor and be configured to detect the location of the moving mechanism 10 based on acceleration information or angular velocity information.

Likewise, in the above-described embodiment, the relative location measuring instrument 141 is implemented as a LiDAR unit. However, this should not be construed as limiting. For example, in a situation where the measuring unit 1B includes a camera, the relative location measuring instrument 141 may also be configured to detect the relative location of the measuring unit 1B based on video shot by the camera. In another example, the relative location measuring instrument 141 may also include an acceleration sensor or a gyro sensor and be configured to detect the relative location of the relative location measuring instrument 141 based on acceleration information or angular velocity information.

In the above-described embodiment, the relative location measuring instrument 141 is installed in the measuring unit 1B. However, this should not be construed as limiting. Alternatively, the relative location measuring instrument 141 may also be installed in the main body unit 1A, for example. In that case, the relative location measuring instrument 141 included in the main body unit 1A may be implemented as a LiDAR unit. In a situation where the main body unit 1A includes a camera, the relative location measuring instrument 141 may also be configured to detect the relative location of the measuring unit 1B based on video shot by the camera.

In the above-described embodiment, the number of the measuring areas in the specific space 4 is four (namely, the measuring areas 41, 42, 43, and 44 are provided). However, the number is not limited to four but may also be, for example, one, two, three, or equal to or greater than five.

In the above-described embodiment, the measuring instrument 11 is configured to measure the illuminance of the light generated by the generator 21. However, this should not be construed as limiting. Alternatively, the measuring instrument 11 may also be configured to measure, for example, the color temperature of the light generated by the generator 21.

In the above-described embodiment, the sensor 22 is a pyroelectric infrared sensor. However, this should not be construed as limiting. Alternatively, the sensor 22 may also be an ultrasonic sensor, a visible light sensor, or an image sensor.

In the above-described embodiment, the generator 21 is a lightning fixture. However, the generator 21 only needs to generate an environment in the specific space 4 and should not be construed as being limited to the lightning fixture. Alternatively, the generator 21 may also be an air conditioner or a heater, for example. In those case, the measuring instrument 11 only needs to measure, as the target of measurement, at least one of, for example, temperature, humidity, or air volume in each of the measuring areas 41, 42, 43, and 44. The generator 21 may also be, for example, an air purifier or an exhaust fan. In those cases, the measuring instrument 11 may measure, as the target of measurement, an air quality in each of the measuring areas 41, 42, 43, and 44, for example. The control unit 17 may also determine the degree of pollution in the air in each of the measuring areas 41, 42, 43, and 44 based on an air quality index (AQI), for example.

In the above-described embodiment, one environment generating system 2 is installed in each of the measuring areas 41, 42, 43, and 44. However, this should not be construed as limiting. Alternatively, two or more environment generating systems 2 may also be provided in each of the measuring areas 41, 42, 43, and 44. The number of the environment generating systems 2 provided in one of the measuring areas 41, 42, 43, and 44 may be the same as or different from , that of the environment generating systems 2 provided in any other one of the measuring areas 41, 42, 43, and 44, whichever is appropriate.

In the above-described embodiment, the communications interface 16 of the measuring system 1 and the communications interface 26 of the environment generating system 2 establish an infrared communication. However, this should not be construed as limiting. Alternatively, the communications interface 16 and communications interface 26 may also establish wireless communication using radio waves, for example.

In the above-described embodiment, the communications interface 16 is installed in the main body unit 1A. However, this should not be construed as limiting. Alternatively, the communications interface 16 may also be installed in the measuring unit 1B . In that case, the correspondence information output by outputter 15 of the main body unit 1A is transmitted to the environment generating system 2 via the communications interface 16 included in the main body unit 1A.

In the above-described embodiment, the correspondence information including the control information for the generator 21 is transmitted to the environment generating system 2 including the generator 21. However, this is not the only data transmitted to the environment generating system 2 . For example, the initial setting data of the sensor 22 may also be transmitted to the environment generating system 2 including the sensor 22.

### (Recapitulation)

As can be seen from the foregoing description, a measuring system (1) according to a first aspect includes: a main body unit (1A) configured to be movable inside a specific space (4) including a measuring area (41, 42, 43, 44); and a measuring unit (1B) removably attached to the main body unit (1A). The main body unit (1A) includes a moving mechanism (10) for moving through the specific space (4). The measuring unit (1B) includes a measuring instrument (11) for measuring a predetermined target of measurement on an environment in the measuring area (41, 42, 43, 44). The measuring instrument (11) is configured to be able to measure the target of measurement with the measuring unit (1B) removed from the main body unit (1A).

This aspect allows for taking measurements easily by removing the measuring unit (1B) from the main body unit (1A), even in a situation where it is difficult for the main body unit (1A) to access the measuring area (41, 42, 43, 44) due to, for example, the presence of an obstacle on the traveling surface of the measuring area (41, 42, 43, 44), or for other reasons.

In a measuring system (1) according to a second aspect, which may be implemented in conjunction with the first aspect, the measuring unit (1B) further includes a supporting member (12) coupled to the measuring instrument (11). The measuring instrument (11) is supported by the main body unit (1A) via the supporting member (12) with the measuring unit (1B) attached to the main body unit (1A).

This aspect allows the measuring instrument (11) to be supported at a predetermined position via the supporting member (12) in a state in which the measuring unit (1B) is attached to the main body unit (1A). This aspect also allows the user to carry the measuring instrument (11) to a target location by gripping, for example, the supporting member (12) in a state in which the measuring unit (1B) is removed from the main body unit (1A).

In a measuring system (1) according to a third aspect, which may be implemented in conjunction with the first or second aspect, the measuring unit (1B) further includes an operating command input device (13) for accepting an operating command about a measurement. The operating command is entered by a human being.

This aspect allows the user to operate the operating command input device (13) at hand and thereby enter a command, for example, to start taking measurements at a target location with the measuring unit (1B) removed from main body unit (1A). Therefore, this aspect allows for taking measurements even in a place that it is difficult for the main body unit (1A) to access.

In a measuring system (1) according to a fourth aspect, which may be implemented in conjunction with any one of the first to third aspects, the measuring unit (1B) further includes a relative location measuring instrument (141) for measuring a relative location of the measuring unit (1B) with respect to the main body unit (1A).

This aspect allows for measuring the relative location of the measuring unit (1B) removed from the main body unit (1A) with respect to the main body unit (1A) by using the relative location measuring instrument (141) provided for the measuring unit (1B).

In a measuring system (1) according to a fifth aspect, which may be implemented in conjunction with any one of the first to third aspects, the main body unit (1A) further includes a relative location measuring instrument (141) for measuring the relative location of the measuring unit (1B) with respect to the main body unit (1A).

This aspect allows for measuring the relative location of the measuring unit (1B) removed from the main body unit (1A) with respect to the main body unit (1A) by using the relative location measuring instrument (141) provided for the main body unit (1A).

In a measuring system (1) according to a sixth aspect, which may be implemented in conjunction with the fourth or fifth aspect, the main body unit (1A) further includes a storage device (18) for storing data about the relative location of the measuring unit (1B) as measured by the relative location measuring instrument (141).

This aspect allows for storing, in the storage device (18), data about the measured relative location of the measuring unit (1B) removed from the main body unit (1A).

A measuring system (1) according to a seventh aspect, which may be implemented in conjunction with any one of the first to third aspects, further includes: a relative location measuring instrument (141) for measuring a relative location of the measuring unit (1B) with respect to the main body unit (1A); a main body location measuring instrument (142) for measuring a location of the main body unit (1A); and a location estimator (145) for estimating a location of the measuring unit (1B). The location estimator (145) estimates the location of the measuring unit (1B) by the relative location of the measuring unit (1B) as measured by the relative location measuring instrument (141), the location of the main body unit (1A) as measured by the main body location measuring instrument (142), and map information about the specific space (4).

This aspect allows for accurately estimating the location of the measuring unit (1B), removed from the main body unit (1A), in the specific space (4).

A measuring system (1) according to an eighth aspect, which may be implemented in conjunction with any one of the first to fifth aspects and the seventh aspect, further includes a storage device (18) for storing data about a location of the measuring unit (1B) and data about the target of measurement measured by the measuring instrument (11) at the location.

This aspect allows for easily acquiring measurement data at any location in the specific space (4) by taking measurements while the user is carrying, in the specific space (4), the measuring unit (1B) removed from the main body unit (1A).

An environmental system (3) according to a ninth aspect includes the measuring system (1) according to any one of the first to eighth aspects and an environment generating system (2). The environment generating system (2) includes a target (20) that is at least one of a generator (21) or a sensor (22). Each of the generator (21) and the sensor (22) generates the environment in the specific space (4).

This aspect allows for easily measuring a predetermined target of measurement on the target (20) by removing the measuring unit (1B) from the main body unit (1A), even in a situation where it is difficult for the main body unit (1A) to access the measuring area (41, 42, 43, 44) due to, for example, the presence of an obstacle on the traveling surface of the measuring area (41, 42, 43, 44), or for other reasons.

A measuring method according to a tenth aspect is a measuring method performed by using a measuring system (1) that moves through a specific space (4) in which a target (20) is installed. The target (20) is at least one of a generator (21) or a sensor (22) of an environment generating system (2). The environment generating system (2) generates an environment in the specific space (4). The measuring method includes: a moving step including causing a main body unit (1A) to move, with a measuring unit (1B) attached thereto, to a measuring area (41, 42, 43, 44) in the specific space (4); and a measuring step including measuring a target of measurement on an environment in the measuring area (41, 42, 43, 44) by using the measuring unit (1B) removed from the main body unit (1A) after the main body unit (1A) has stopped moving.

This aspect allows for easily measuring a predetermined target of measurement on the target (20) by removing the measuring unit (1B) from the main body unit (1A), when it is difficult for the main body unit (1A) to access the measuring area (41, 42, 43, 44) due to, for example, the presence of an obstacle on the traveling surface of the measuring area (41, 42, 43, 44), or for other reasons.

A program according to an eleventh aspect is designed to cause one or more processors to perform the measuring method according to the tenth aspect.

This aspect allows for easily measuring a predetermined target of measurement on the target (20), by removing the measuring unit (1B) from the main body unit (1A), when it is difficult for the main body unit (1A) to access the measuring area (41, 42, 43, 44).

Note that the constituent elements according to the second to eighth aspects are not essential constituent elements for the measuring system (1) but may be omitted as appropriate.

### Reference Signs List

- 1: Measuring System
- 1A: Main Body Unit
- 1B: Measuring Unit
- 10: Moving Mechanism
- 11: Measuring Instrument
- 12: Supporting Member
- 13: Operating Command Input Device
- 141: Relative Location Measuring Instrument
- 142: Main Body Location Measuring Instrument
- 145: Location Estimator
- 18: Storage Device
- 2: Environment Generating System
- 20: Target
- 21: Generator
- 22: Sensor
- 3: Environmental System
- 4: Specific Space
- 41: Measuring Area
- 42: Measuring Area
- 43: Measuring Area
- 44: Measuring Area

## Claims

1. A measuring system comprising:
a main body unit configured to be movable inside a specific space including a measuring area; and
a measuring unit removably attached to the main body unit,
the main body unit including a moving mechanism configured to move through the specific space,
the measuring unit including a measuring instrument configured to measure a predetermined target of measurement on an environment in the measuring area, and
the measuring instrument being configured to be able to measure the target of measurement with the measuring unit removed from the main body unit.

2. The measuring system of claim 1, wherein
the measuring unit further includes a supporting member coupled to the measuring instrument, and
the measuring instrument is supported by the main body unit via the supporting member with the measuring unit attached to the main body unit.

3. The measuring system of claim 1 or 2, wherein
the measuring unit further includes an operating command input device configured to accept an operating command about a measurement, the operating command being entered by a human being.

4. The measuring system of any one of claims 1 to 3, wherein
the measuring unit further includes a relative location measuring instrument configured to measure a relative location of the measuring unit with respect to the main body unit.

5. The measuring system of any one of claims 1 to 3, wherein
the main body unit further includes a relative location measuring instrument configured to measure a relative location of the measuring unit with respect to the main body unit.

6. The measuring system of claim 4 or 5, wherein
the main body unit further includes a storage device configured to store data about the relative location of the measuring unit as measured by the relative location measuring instrument.

7. The measuring system of any one of claims 1 to 3, further comprising:
a relative location measuring instrument configured to measure a relative location of the measuring unit with respect to the main body unit;
a main body location measuring instrument configured to measure a location of the main body unit; and
a location estimator configured to estimate a location of the measuring unit, wherein
the location estimator is configured to estimate the location of the measuring unit based on the relative location of the measuring unit as measured by the relative location measuring instrument, the location of the main body unit as measured by the main body location measuring instrument, and map information about the specific space.

8. The measuring system of any one of claims 1 to 5 and 7, further comprising a storage device configured to store data about a location of the measuring unit and data about the target of measurement measured by the measuring instrument at the location.

9. An environmental system comprising:
the measuring system according to any one of claims 1 to 8; and
an environment generating system,
the environment generating system including a target that is at least one of a generator or a sensor, each of the generator and the sensor generating the environment in the specific space.

10. A measuring method performed by using a measuring system configured to move through a specific space in which a target is installed, the target being at least one of a generator or a sensor of an environment generating system, the environment generating system being configured to generate an environment in the specific space, the measuring method comprising:
a moving step including causing a main body unit to move, with a measuring unit attached thereto, to a measuring area in the specific space; and
a measuring step including measuring a target of measurement on the environment in the measuring area by using the measuring unit removed from the main body unit after the main body unit has stopped moving.

11. A program designed to cause one or more processors to perform the measuring method of claim 10.
